# EUROPÄISCHE PATENTSCHRIFT

(11) **EP 4 054 825 B1**
(45) Veröffentlichungstag und Bekanntmachung des Hinweises auf die Patenterteilung: **04.09.2024**
(21) Anmeldenummer: 20803115.3
(22) Anmeldetag: 04.11.2020
(51) Int. Cl.: B29C 64/118, B29C 64/153, B29C 64/112, B29C 64/188, B29C 59/02

(54) **VERFAHREN ZUR HERSTELLUNG EINES FUNKTIONSBAUTEIL-PAKETS**
PROCESS FOR MANUFAACTURING OF A FUNCTINAL ASSEMBLEY
RPOCÉDÉ DE FABRICATION D'UN ASSEMBLAGE DE FUNCTION

(30) Priorität: 06.11.2019 DE 102019217127
(43) Veröffentlichungstag der Anmeldung: 14.09.2022
(73) Patentinhaber: Robert Bosch GmbH, 70442 Stuttgart (DE)
(72) Erfinder: KUGLER, Andreas, 73553 Alfdorf (DE)
(86) Internationale Anmeldenummer: PCT/EP2020/080863
(87) Internationale Veröffentlichungsnummer: WO 2021/089573

(56) Entgegenhaltungen:
- EP-A1- 3 483 647
- WO-A1-2016/044651
- DE-A1- 102012 022 894
- DE-A1- 102017 000 744
- DE-A1- 102018 210 909
- US-A1- 2013 289 593
- US-A1- 2020 111 342

## Beschreibung

### Technisches Gebiet

Die Erfindung bezieht sich auf ein Verfahren zur Herstellung eines Funktionsbauteil-Pakets mit mindestens einem Trägersubstrat, auf dem mindestens ein Funktionsbauteil angeordnet ist und die Verwendung des Verfahrens zur Herstellung beispielsweise von Sensor-Packages.

### Stand der Technik

DE 10 2014 201 121 A1 bezieht sich auf ein elektronisches Funktionsbauteil und ein Verfahren zur Herstellung eines elektronischen Funktionsbauteils. Das elektronische Funktionsbauteil umfasst ein elektronisches Bauteil, das mittels eines dreidimensionalen Druckprozesses in das Funktionsbauteil eingebettet wird. Durch den dreidimensionalen Druckprozess kann dabei neben dem Umschließen des elektronischen Bauteils auch eine individuelle Anpassung bezüglich Formgebung und mechanischen Eigenschaften des Funktionsbauteils erfolgen. Ferner werden die elektrischen Anschlüsse des elektronischen Bauteiles in geeigneter Form an die Oberfläche des Funktionsbauteils geführt.

DE 10 2015 102 884 A1 hat ein Verfahren zum Packen eines Halbleiterchips unter Verwendung eines 3D-Druckprozesses sowie ein Halbleiterpaket mit abgewinkelten Oberflächen zum Gegenstand. Es erfolgt eine Bereitstellung eines Halbleitermoduls mit einer ersten Oberfläche, einer zweiten Oberfläche gegenüber der ersten Oberfläche und Kantenseiten, die sich zwischen der ersten Oberfläche und der zweiten Oberfläche erstrecken. Eine Packungsbaugruppe wird zumindest teilweise durch einen 3D-Druckprozess ausgebildet. Die Packungsbaugruppe umfasst das Halbleitermodul und eine schützende Abdeckung, die sich über die erste Oberfläche erstreckt.

DE 10 2017 216 711 A1 hat eine Vorrichtung zur Herstellung von mit einer Gießmasse zumindest bereichsweise überdeckten auf einem Trägerelement angeordneten Bauelementen zum Gegenstand. Die Vorrichtung umfasst wenigstens zwei zueinander beweglich angeordnete Werkzeugteile, die in einer geschlossenen Stellung einen Aufnahmeraum zur Aufnahme des Trägerelementes mit den Bauelementen und der Gießmasse ausbilden. Wenigstens ein Werkzeugteil ist auf der diesem Werkzeugteil zugewandten Seite in Wirkverbindung mit einem elastisch ausgebildeten Element angeordnet.

### Darstellung der Erfindung

Erfindungsgemäß wird ein Verfahren vorgeschlagen zur Herstellung eines Funktionsbauteil-Pakets mit nachfolgenden Verfahrensschritten:
a) Herstellen eines Trägersubstrats in einem Nutzenformat,
b) Bestückung des gemäß Verfahrensschritt a) erhaltenen Trägersubstrats mit elektronischen Bauelementen,
c) Herstellen von Bond-Verbindungen zwischen dem mindestens einen Funktionsbauteil und elektrischen Anbindungen,
d) Aufbringen einer Vergussmasse auf das Trägersubstrat und dem darauf angeordneten mindestens einen Funktionsbauteil,
e) Erzeugen freigesparter Bereiche am Funktionsbauteil-Paket und
f) Herstellen eines Linsenhalteraufbaus, eines Luftmassenmessers, eines Drucksensors oder eines Gassensors im 3D-Druck oder eines weiteren 3D-Druckaufbaus innerhalb der freigesparten Bereiche des Funktionsbauteil-Pakets.

Durch die erfindungsgemäß vorgeschlagenen Schritte werden die Vorteile der Packaging-Technologie, d. h. Zuverlässigkeit, Kompatibilität, lonenreinheit mit den Vorteilen der 3D-Drucktechnik hinsichtlich der erreichbaren Freiheitsgrade in der Geometriegestaltung zusammengeführt. Die vorgeschlagene Kombination des erfindungsgeschlagenen Verfahrens bietet einen erheblichen Vorteil für die Gestaltung von verkapselten Schaltungsträgern beziehungsweise von Sensor-Packages.

In Weiterführung des erfindungsgemäß vorgeschlagenen Verfahrens werden die komplexen Strukturen gemäß Verfahrensschritt d) mittels 3D-Druckverfahren, wie beispielsweise Inkjet-Druck, FDM (Fused Deposition Modeling), Lasersintern (SLA), einem Druckprozess mittels Härtung in Stereolithografie, erzeugt. Zum Abformen der Teile könnten auch weitere am Markt etablierte Verfahren eingesetzt werden, je nach Anforderung an das zu verarbeitende Material und/oder die herzustellende Geometrie. Durch das erfindungsgemäß vorgeschlagene Verfahren können die komplexen Strukturen elektrisch leitend oder auch elektrisch nicht-leitend ausgeführt werden.

In Weiterführung des erfindungsgemäß vorgeschlagenen Verfahrens werden gemäß Verfahrensschritt d) die komplexen Strukturen mittels eingebrachter Marker zum Positionsabgleich erzeugt.

Die Marker, die dem Positionsabgleich dienen, werden entweder auf dem Trägersubstrat (Platine) ausgebildet beim LPM(Low Pressure Molding)-Prozess und dann freigelegt oder aber als Geometrie in die Moldform eingebracht. Vorteilhafterweise sind diese Marker optisch zu erkennen.

Beim erfindungsgemäß vorgeschlagenen Verfahren ermöglichen die komplexen Strukturen beispielsweise einen Medienfluss, einen Lichteinfall auf Imager-Platinen oder Strahlbündelungen oder auch Abschirmungen oder auch eine Strahlformung abhängig von deren Geometrie.

Beim erfindungsgemäß vorgeschlagenen Verfahren sind die freigesparten Bereiche, die gemäß Verfahrensschritt c) am Funktionsbauteil-Paket erzeugt werden, beispielsweise auf Sensorbereichen, auf Membranen, auf optischen Detektionsfeldern oder auf Imager-Platinen vorgesehen. In vorteilhafter Weise können beispielsweise mit dem erfindungsgemäß vorgeschlagenen Verfahren gemäß Verfahrensschritt d) auf Imager-Platinen, die beispielsweise auf einem Trägersubstrat angeordnet sein können, Linsenelementhalteraufbauten erzeugt werden.

Beim erfindungsgemäß vorgeschlagenen Verfahren besteht darüber hinaus die Möglichkeit, in den zuvor erzeugten Linsenelementhalteraufbauten mindestens ein Linsenelement auf dem Wege des 3D-Druckes herzustellen. Alternativ dazu besteht die Möglichkeit, das erfindungsgemäß vorgeschlagene Verfahren so zu gestalten, dass im Linsenelementhalteraufbau eine Anordnung von mehreren, beispielsweise übereinanderliegend angeordneten, Linsenelementen hergestellt werden kann.

Darüber hinaus bezieht sich die vorliegende Erfindung auf die Verwendung des Verfahrens zur Herstellung eines Sensor-Packages mit MEMS-Sensoren (MEMS _{≙} Micro-Electro-Mechanical Systems) oder Schaltungsträger mit mindestens einem verkapselten Funktionsbauteil.

### Vorteile der Erfindung

Die mit der erfindungsgemäß vorgeschlagenen Lösung erzielbaren Vorteile liegen darin, dass durch das erfindungsgemäß vorgeschlagene Verfahren die Vorteile verkapselter elektronischer Komponenten bei Schaltungsträgern oder anderen elektronischen Komponenten genutzt werden können.

An diesen innerhalb eines vorgeschalteten Bearbeitungsvorgangs hergestellten Funktionsbauteil-Paketen werden aktive Flächen freigespart, die als Ausgangsbasis für einen sich daran anschließenden 3D-Druckschritt gemäß Verfahrensschritt f) dienen. Es können geometrisch sehr anspruchsvolle Strukturen auf den freigesparten Bereichen des Funktionsbauteil-Pakets erzeugt werden, die im Rahmen bekannter spanender oder spanloser Verfahren nicht herstellbare Geometrien erzeugen können, beispielsweise komplexe Kanäle für die Medien- und Strömungsführung, Gassensoren, Linsenhaltersysteme, Luftmassenmesser oder dergleichen. Der schlagende Vorteil des erfindungsgemäß vorgeschlagenen Verfahrens ist darin zu sehen, dass die bekannten Vorteile aus der Packaging-Technologie, beispielsweise eine hohe Zuverlässigkeit, eine hohe Kompatibilität sowie die erzielbare lonenreinheit mit den Vorteilen, die die 3D-Drucktechnik bietet, kombiniert werden können. Bei der 3D-Drucktechnik ist besonders hervorzuheben, dass sich erhebliche Freiheitsgrade hinsichtlich der Geometriegestaltung erreichen lassen.

Die Vorteile beider Verfahren, d. h. der Packaging-Technologie sowie des 3D-Druckverfahrens werden beim erfindungsgemäß vorgeschlagenen Verfahren zusammengeführt und stellen einen erheblichen Vorteil für die Gestaltung neuer Funktionsbauteil-Pakete, beispielsweise Sensor-Packages und dergleichen mehr, dar.

Ausgehend von beispielsweise auf dem Wege des LPM(Low Pressure Molding)-Verfahrens hergestellter Funktionsbauteil-Pakete, die großformatige Nutzenanordnungen aufweisen, werden beim erfindungsgemäß vorgeschlagenen Verfahren mittels eingebrachter Marker in den nachfolgenden Druckprozessen Positionsabgleiche vorgenommen, um die Lage der im 3D-Druckverfahren aufzubauenden Strukturen abzugleichen. Außerdem bietet ein panelformatiges und ebenes Package aus dem LPM(Low Pressure Molding)-Verfahren eine ideale Startposition für alle gängigen am Markt erhältlichen 3D-Druckverfahren. Bei der Herstellung derartiger Strukturen, beispielsweise Linsenelementhalteraufbauten, einen Medienfluss erlaubende Strukturen, einen Lichteinfall erlaubende Strukturen oder Geometrien, die der Strahlbündelung dienen, und dergleichen mehr, kommen 3D-Druckverfahren, wie zum Beispiel das Inkjet-Drucken, FDM (Fused Deposition Modeling), Lasersintern (SLA) infrage.

Durch das erfindungsgemäß vorgeschlagene Verfahren lassen sich elektronische Komponenten und Sensorelemente auf bzw. in einen Schaltungsträger integrieren. Es kann eine Verpackung elektronischer Schaltelemente in großformatigen Nutzen erreicht werden. In der Leiterplattenfertigung werden in der Regel viele einzelne kleine Schaltungen auf einem großen Panel einer Leiterplatte in einer Anordnung gefertigt und dann zum Schluss der Bearbeitung ausgetrennt. In der Leiterplattenfertigung wird die Anordnung vieler kleiner Schaltungen in einem Panel als Nutzen bezeichnet. Dabei werden im Großformat Platinen gefertigt, anschließend mit Bausteinen, insbesondere Sensoren, bestückt, die elektrisch kontaktiert werden; daran schließt sich ein Übermolden, d. h. ein Vergießen beziehungsweise ein Verpacken, des kompletten Nutzens an. Im sich anschließenden LPM(Low Pressure Molding)-Verfahren werden dann Bereiche, insbesondere die sensitiven Sensorflächen beim Übermolden, d. h. Vergießen oder anderweitig erfolgenden Verpacken, so abgedichtet, dass auf diese Bereiche kein Verpackungsmaterial, d. h. keine Vergussmasse und ähnliches, gelangen kann.

Beim erfindungsgemäß vorgeschlagenen Verfahren können Strukturen bzw. Geometrien hergestellt werden, beispielsweise durch einen Strukturaufbau ermöglichende 3D-Druckverfahren. Es lassen sich zusätzliche Funktionen, so zum Beispiel optische Funktionen übernehmende Linsen, eine mechanische Funktion übernehmende Anströmkanäle, beispielsweise beim Luftmassenmesser oder Radarantennen, die eine elektromagnetische Funktion ausüben, in ein Funktionsbauteil-Paket integrieren. Beim erfindungsgemäß vorgeschlagenen Verfahren besteht die Möglichkeit, Sensor-Packages samt Auswerteelektronik in einem Bauteil unterzubringen.

Beim erfindungsgemäß vorgeschlagenen Verfahren werden die Vorteile der Packaging-Technologie und des 3D-Druckverfahrens zusammengeführt, wobei die aus den vorgelagerten Bearbeitungsschritten hervorgehende Startschicht, welche die Ausgangsschicht für den 3D-Druck darstellt, die elektrischen Komponenten enthält. Des Weiteren sind hier definierte Startpositionen in Form von optisch erkennbaren Markern vorgesehen. Das im Wege der Leiterplattenfertigung erhaltene großformatige Panelformat eignet sich besonders gut dafür. Des Weiteren ist von Vorteil, wenn die Formate der 3D-Drucker sowie die Sensor-Packages im Nutzen miteinander kompatibel sind; ein weiterer Vorteil ergibt sich durch eine gute Haftung, die bei den Komponenten, die sich im Wege der beiden miteinander kombinierten Verfahren herstellen lassen, beispielsweise durch eine Plasmabehandlung optimiert werden kann.

### Kurze Beschreibung der Zeichnungen

Ausführungsformen der Erfindung werden anhand der Zeichnungen und der nachfolgenden Beschreibung näher erläutert.

Es zeigen:
- Figur 1: ein Sensormodul, beispielsweise einen Heißfilm-Luftmassenmesser, hergestellt im LPM(Low Pressure Molding)-Verfahren als Startbauteil für einen Strukturaufbau im 3D-Druck,
- Figur 2: ein gemoldetes Sensormodul in Schnittdarstellung,
- Figur 3: einen Längsschnitt durch ein Funktionsbauteil-Paket mit freigespartem Bereich ober- und unterhalb des Funktionsbauteils,
- Figur 4: eine perspektivische Ansicht eines Funktionsbauteil-Pakets mit Imager-Platinen und auf diesen aufgebauten Linsenelementhalteraufbauten und
- Figur 5: einen Längsschnitt durch ein Funktionsbauteil-Paket mit einem Linsenelementhalteraufbau oberhalb eines Funktionsbauteils, wobei der Linsenelementhalteraufbau einen Linsenelementaufbau umfasst, der ebenfalls auf dem Wege des 3D-Druckes erzeugt ist.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

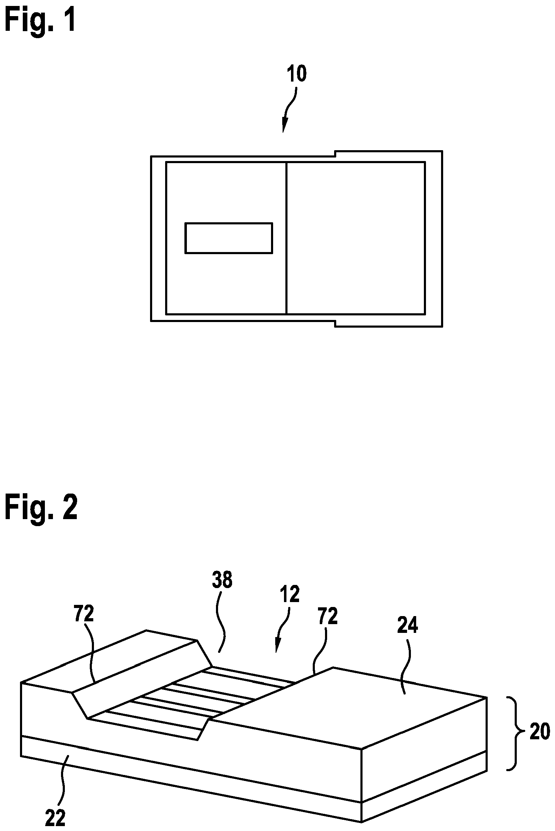

Figur 1 zeigt die Draufsicht auf ein Sensormodul 10. In der Darstellung gemäß Figur 1 ist ein Sensormodul 10 dargestellt, welches beispielsweise einen MEMS-Sensor, einen Luftmassensensor, darstellt (MEMS ≙ Micro-Electro-Mechanical System). Auf dem in Figur 1 dargestellten Bauteil, beziehungsweise auf dessen Oberseite, können nunmehr mittels des 3D-Druckverfahrens für den Sensor geeignete Anströmkanäle aufgedruckt werden.

Figur 2 zeigt in perspektivischer Ansicht ein gemoldetes Modul 12, ein Trägersubstrat 22 umfassend, auf dem eine Vergussmasse 24 aufgebracht ist, in der sich ein freigesparter Bereich 38 befindet. Die Vergussmasse 24 stellt die Verpackung des Trägersubstrats 22 dar, beispielsweise eine Leiterplatine, auf der mehrere kleine Schaltungen als Nutzen angeordnet sind. Durch den in Figur 2 in perspektivischer Ansicht wiedergegebenen freigesparten Bereich 38 ist der Bereich gegeben, der durch Marker, insbesondere optische Marker 72, als Startfläche für einen sich anschließenden Strukturaufbau mittels eines 3D-Druckverfahrens markiert ist.

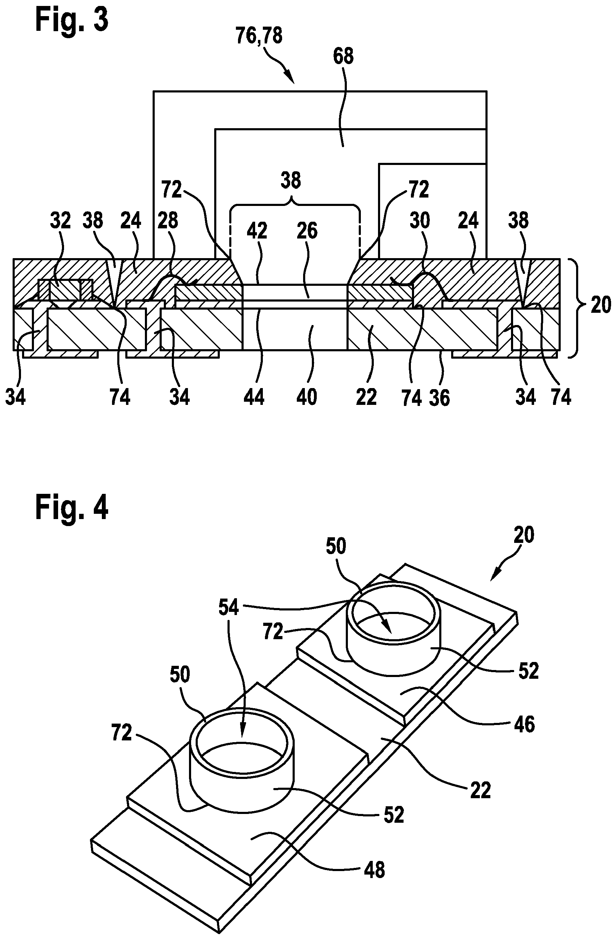

Figur 3 zeigt einen Längsschnitt durch ein Funktionsbauteil-Paket 20, welches auch als "Sensor-Package" bezeichnet wird, mit einem Trägersubstrat 22, auch als "Platine" bezeichnet, und einer Vergussmasse 24, die auch als "Verpackung" bezeichnet wird. Aus der Darstellung gemäß Figur 3 geht hervor, dass das Funktionsbauteil-Paket 20 mindestens ein als Schicht ausgebildetes Trägersubstrat 22 umfasst. Auf der Oberseite des Trägersubstrats 22 befindet sich ein Funktionsbauteil 26. Dieses ist im Wesentlichen flach ausgeführt und stellt einen Sensor dar. Das Funktionsbauteil 26 ist über eine erste Bond-Verbindung 28 und über eine weitere zweite Bond-Verbindung 30 mit elektrischen Anbindungen 34, die im Trägersubstrat 22 vorgesehen sind, verbunden. Des Weiteren befindet sich auf dem Trägersubstrat 22 mindestens ein weiteres elektronisches Bauelement 32, welches ebenfalls mit der elektrischen Anbindung 34, die das Trägersubstrat 22 durchzieht, leitend verbunden ist.

Die elektrischen Anbindungen 34 erstrecken sich bis zu einer Unterseite 36 des Trägersubstrats 22.

Wie aus Figur 3 hervorgeht, sind sowohl das mindestens eine elektronische Bauelement 32 als auch das Funktionsbauteil 26 von der Vergussmasse 24 überdeckt beziehungsweise in diese eingebettet. Um eine Zugänglichkeit zu einer ersten Seite 42 des Funktionsbauteils 26 zu erreichen, wird in dem Funktionsbauteil-Paket 20 insbesondere im Bereich der Vergussmasse 24 mindestens ein freigesparter Bereich 38 erzeugt. Der freigesparte Bereich 38 kann, wie in Figur 3 dargestellt, die erste Seite 42 des Funktionsbauteils 26 zugänglich machen, es besteht jedoch auch die Möglichkeit, durch Ausbildung einer Öffnung 40 im Trägersubstrat 22 eine zweite Seite 44 des Funktionsbauteils 26 zugänglich zu machen. Auf der Oberseite des Trägersubstrats 22, beispielsweise als Platine ausgeführt, befinden sich Passermarken 74 zum Positionsabgleich; optische Marker 72 können sich auf der Oberseite der als Verpackung dienenden Vergussmasse 24 befinden, mit welcher das Funktionsbauteil-Paket 20 verkapselt ist. Oberhalb der Passermarken 74 auf der Oberseite des Trägersubstrats 22 (Leiterplatine) befinden sich ebenfalls freigesparte Bereiche 38.

Nachdem die freigesparten Bereiche 38 die Zugänglichkeit zu den Seiten 42 beziehungsweise 44 des Funktionsbauteils 26 ermöglichen, können auf dem Wege des erfindungsgemäß vorgeschlagenen Verfahrens, insbesondere auf dem Wege des 3D-Druckverfahrens, beispielsweise Sensorflächen durch Detektionsfelder oder Imager-Platinen 46, 48 (vgl. Darstellung gemäß Figur 4) oder auch Folienantennen für Radare mit mechanischen Strukturen versehen werden. Bei diesen mechanischen Strukturen kann es sich beispielsweise um Linsenelementhalteraufbauten 50, wie sie in Figur 4 schematisch dargestellt sind, handeln, oder um mechanische Strukturen, die einen Medienfluss, einen Lichteinfall, beispielsweise Linsen oder Kanäle, oder auch Strahlbündelungen ermöglichen. Die auf dem Wege des 3D-Druckes an den freigesparten Bereichen 38 erzeugten mechanischen Strukturen können elektrisch leitend oder auch elektrisch nicht-leitend, je nach erwähntem 3D-Druckmaterial, ausgeführt werden. Dadurch lassen sich Leiterstrukturen auf einer Oberseite drucken; es besteht jedoch auch die Möglichkeit, abschirmende oder strahlformende Geometrien im Wege des 3D-Druckverfahrens innerhalb der freigesparten Bereiche 38 oder auf der Oberfläche des Druckbauteils zu erzeugen.

Im Wege des 3D-Druckens können noch zusätzliche elektronische Bauelemente 32 auf der Oberseite des Funktionsbauteil-Pakets 20 gemäß Darstellung in Figur 3 angebracht werden. Elektrische Kontaktierungen können beispielsweise mittels gedruckter Vias innerhalb der freigesparten Bereiche 38 unterhalb der Schicht der Vergussmasse 24 erzeugt werden. Auf der Oberseite werden die Geometrien im 3D-Druck aufgebracht, beispielsweise Kanäle mit Zugang zu den freigesparten Bereichen 38. Wie zudem aus der Darstellung gemäß Figur 3 hervorgeht, ist ein 3D-Druckaufbau 76 in schematischer Weise wiedergegeben, welcher auf der Oberseite der Vergussmasse 24, die die Verkapselung darstellt, anhand der optischen Marker 72 positioniert wird. In dem in Figur 3 in beispielhafter Weise dargestellten 3D-Druckaufbau 76 ist innerhalb eines Luftmassenmessers 78 ein Anströmkanal 68 ausgeführt. Dieser umfasst eine 90°-Abwinklung und fluchtet mit der Öffnung 40, die im Trägersubstrat 22 eingelassen ist.

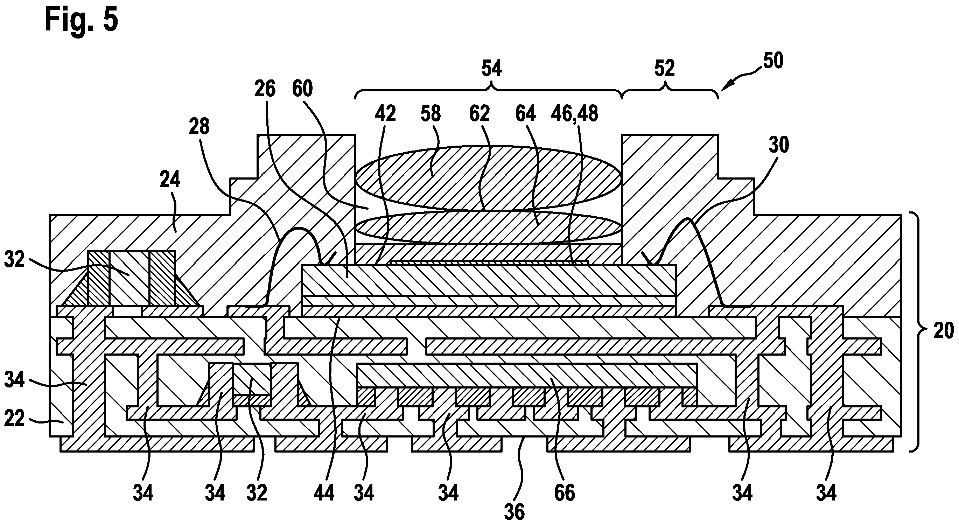

Figur 4 zeigt eine perspektivische Ansicht eines Funktionsbauteil-Pakets 20 in einer variierten Ausführungsform, hergestellt mit dem erfindungsgemäß vorgeschlagenen Verfahren. Figur 4 zeigt, dass das Funktionsbauteil-Paket 20 ein Trägersubstrat 22 umfasst, auf dem sich nebeneinander angeordnet eine erste Imager-Platine 46 sowie eine weitere zweite Imager-Platine 48 befinden. Auf beide Imager-Platinen 46, 48 werden im Wege des 3D-Druckverfahrens hergestellte Linsenhalteraufbauten 50 aufgebaut. Diese haben, wie in der perspektivischen Darstellung gemäß Figur 4 angedeutet, ein domförmiges, zylindrisches Aussehen und umschließen mit ihrer Wand 52 jeweils eine Öffnung 54. Durch die auf die Oberseiten der ersten Imager-Platine 46 beziehungsweise der zweiten Imager-Platine 48 aufgebrachten Linsenelementhalteraufbauten 50 werden mechanische Strukturen im Wege des 3D-Druckverfahrens erzeugt, die einen Lichteinfall ermöglichen. Darüber hinaus können, wie nachstehend anhand von Figur 5 noch beschrieben werden wird, auf dem Wege des 3D-Druckes Linsenelemente 58, 64 erzeugt werden, die in den Linsenelementhalteraufbau 50 gemäß Figur 4 eingepasst sind.

Figur 5 zeigt einen Längsschnitt durch ein Funktionsbauteil-Paket 20, dessen Oberseite einen Linsenelementhalteraufbau 50, erzeugt in 3D-Drucktechnik, aufweist. Figur 5 ist zu entnehmen, dass am Trägersubstrat 22 eine Anzahl von elektronischen Bauelementen 32 aufgenommen ist. Die jeweiligen elektronischen Bauelemente 32 können sich auf der Oberseite des Trägersubstrats 22, an dessen Unterseite 36 befinden; es besteht auch die Möglichkeit, die jeweiligen elektronischen Bauelemente 32 in das Trägersubstrat 22 des Funktionsbauteil-Pakets 20 gemäß der Darstellung in Figur 5 zu integrieren.

Wie Figur 5 des Weiteren zeigt, werden die einzelnen elektronischen Bauelemente 32 mit elektrischen Anbindungen 34 verbunden, so dass deren elektrische Kontaktierung gewährleistet ist.

Auf eine erste Seite 42 des Funktionsbauteils 26 können Imager-Platinen 46, 48 aufgebracht sein. Bei dem Funktionsbauteil 26 gemäß Figur 5 handelt es sich zum Beispiel um einen Imager-Halbleiter, mit einer lichtaktiven Fläche, der Imager-Platine 46, 48. Ab dieser erfolgt ein Aufbau weiterer Strukturen in vertikale Richtung nach oben mittels eines 3D-Druckverfahrens. Wie Figur 5 weiter zeigt, ist das Funktionsbauteil 26 über die erste Bond-Verbindung 28 und über die zweite Bond-Verbindung 30 mit den elektrischen Anbindungen 34 am Trägersubstrat 22 verbunden.

Gemäß Figur 5 befindet sich auf der Oberseite des Trägersubstrats 22 - als Teil der Vergussmasse 24 - ein auf der Vergussmasse 24 applizierter mittels 3D-Druckverfahrens erzeugter Linsenelementhalteraufbau 50. Der Linsenelementhalteraufbau 50 kann alternativ auch gemoldet ausgeführt sein. Der Linsenelementhalteraufbau 50 wird durch eine Wand 52 begrenzt und umschließt eine Öffnung 54. In diese Öffnung 54 des Linsenelementhalteraufbaus 50 gemäß dem Längsschnitt in Figur 5 sind - oberhalb der Imager-Platinen 46 bzw. 48 - Linsenelemente 58 bzw. 64 angeordnet. Das erste Linsenelement 58 und das zweite Linsenelement 64 können sich bei entsprechender Materialwahl im 3D-Druckverfahren entlang einer Kontaktzone 62 berühren. In der in Figur 5 dargestellten Ausführungsvariante eines Linsenaufbaus aus dem ersten Linsenelement 58 und dem zweiten Linsenelement 64 sind die Linsenelemente 58, 64 konvex beschaffen und erzeugen aufgrund ihrer Gestalt Freiräume 60 beziehungsweise eine Kontaktzone 62 zwischen dem ersten Linsenelement 58 sowie dem zweiten Linsenelement 64.

Durch die in Figur 5 dargestellte Anordnung wird demnach ein Funktionsbauteil-Paket 20 bereitgestellt, bei dem ein Lichteinfall durch das erste Linsenelement 58 und das zweite Linsenelement 64, die übereinanderliegend im Linsenelementhalteraufbau 50 angeordnet sind, auf die Imager-Platinen 46, 48 geleitet wird. Wenngleich auch in der Darstellung gemäß Figur 5 nicht dargestellt, können die Linsenelemente 58, 64 auch konkav oder konvex/konkav oder in anderen Geometrien ausgebildet sein. Das Funktionsbauteil-Paket 20 enthält darüber hinaus eine in diesem eingebettete Auswerteelektronik 66.

An Stelle des in Figur 5 dargestellten Linsenelementhalteraufbaus 50 zur Aufnahme des ersten Linsenelementes 58 sowie zur Aufnahme des zweiten Linsenelementes 64, könnten auf dem Wege des 3D-Druckverfahrens auf Membranen beziehungsweise optische Detektionsfelder oder Folienantennen mechanische Strukturen aufgebracht werden, die einen Medienfluss beziehungsweise Strahlbündelungen ermöglichen. Des Weiteren könnten Leiterstrukturen gedruckt werden oder auch abschirmende oder strahlformende Geometrien.

Das 3D-Druckverfahren bietet sich hier insbesondere an, da hier mechanisch komplexe Strukturen erzeugt werden, die in bekannten spanenden oder spanlosen Verfahren nicht herstellbar sind. Derartige mechanisch komplexe Strukturen können durch die Ausbildung der freigesparten Bereiche 38 beispielsweise auf die erste Seite 42 des Funktionsbauteils 26 (vgl. Darstellung gemäß Figur 3) aufgedruckt werden. Gleiches gilt für die Unterseite, d. h. die zweite Seite 44 des Funktionsbauteils 26.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen. Die Erfindung ist im beigefügten Anspruchssatz definiert.

## Patentansprüche

1. Verfahren zur Herstellung eines Funktionsbauteil-Pakets (20) mit nachfolgenden Verfahrensschritten:
a) Herstellen eines Trägersubstrats (22) in einem Nutzenformat,
b) Bestückung des gemäß Verfahrensschritts a) erhaltenen Trägersubstrats (22) mit elektronischen Bauelementen (32),
c) Herstellen von Bond-Verbindungen (28, 30) zwischen mindestens einem Funktionsbauteil (26) und elektrischen Anbindungen (34),
d) Aufbringen einer Vergussmasse (24) auf das Trägersubstrat (22) und dem darauf angeordneten mindestens einen Funktionsbauteil (26),
e) Erzeugen freigesparter Bereiche (38) am Funktionsbauteil-Paket (20) und **gekennzeichnet durch**
f) Herstellen eines Linsenhalteraufbaus (50), eines Luftmassenmessers (78), eines Drucksensors oder eines Gassensors im 3D-Druck oder eines weiteren 3D-Druckaufbaus (76) innerhalb der freigesparten Bereiche (38) des Funktionsbauteil-Pakets (20).

2. Verfahren gemäß Anspruch 1, **dadurch gekennzeichnet, dass** der Linsenhalteraufbau (50) oder der Luftmassenmesser (78) oder der weitere 3D-Druckaufbau (76) gemäß Verfahrensschritt f) mittels 3D-Druckverfahren wie Inkjet-Druck oder FDM (Fused Deposition Modeling) oder Laser-Sintern (SLA) erzeugt werden.

3. Verfahren gemäß Anspruch 1, **dadurch gekennzeichnet, dass** der Linsenhalteraufbau (50) oder der Luftmassenmesser (78) oder der weitere 3D-Druckaufbau (76) gemäß Verfahrensschritt f) aus elektrisch nicht-leitenden Materialien ausgeführt werden.

4. Verfahren gemäß Anspruch 1, **dadurch gekennzeichnet, dass** gemäß Verfahrensschritt f) der Linsenhalteraufbau (50) oder der Luftmassenmesser (78) oder der weitere 3D-Druckaufbau mittels eingebauter optischer Marker (72) zum Positionsabgleich oder mittels Passermarken (74) auf einer Oberseite des Trägersubstrats (22) erzeugt werden.

5. Verfahren gemäß Anspruch 1, **dadurch gekennzeichnet, dass** der Linsenhalteraufbau (50) oder der Luftmassenmesser (78) oder der weitere 3D-Druckaufbau (76) einen Medienfluss, einen Lichteinfall auf Imager-Platinen (46, 48), Strahlbündelungen, eine Abschirmung oder eine Strahlformung ermöglichen.

6. Verfahren gemäß Anspruch 1, **dadurch gekennzeichnet, dass** die freigesparten Bereiche (38) gemäß Verfahrensschritt e) am Funktionsbauteil-Paket (20) auf Sensorbereichen, Membranen, optischen Detektionsfeldern oder Imager-Platinen (46, 48) erzeugt werden.

7. Verfahren gemäß Anspruch 1, **dadurch gekennzeichnet, dass** am Funktionsbauteil-Paket (20) auf Imager-Platinen (46, 48) gemäß Verfahrensschritt f) Linsenelementhalteraufbauten (50) erzeugt werden.

8. Verfahren gemäß Anspruch 7, **dadurch gekennzeichnet, dass** gemäß Verfahrensschritt f) im Linsenelementhalteraufbau (50) mindestens ein Linsenelement (58) im 3D-Druck hergestellt wird.

9. Verfahren gemäß Anspruch 7, **dadurch gekennzeichnet, dass** gemäß Verfahrensschritt f) im Linsenelementhalteraufbau (50) eine Anordnung mehrerer Linsenelemente (58, 64) im 3D-Druck hergestellt wird.

10. Verwendung des Verfahrens gemäß einem der Ansprüche 1 bis 9 zur Herstellung von Funktionsbauteil-Paketen (20) mit MEMS-Sensoren (≙ Micro-Electro-Mechanical System) oder Schaltungsträger mit mindestens einem verkapselten Funktionsbauteil (26).

## Claims

1. Method for producing a functional device assembly (20), comprising the following method steps:
a) producing a carrier substrate (22) in a panel format,
b) equipping the carrier substrate (22) obtained according to method step
a) with electronic components (32),
c) producing bond connections (28, 30) between at least one functional device (26) and electrical links (34),
d) applying a potting compound (24) to the carrier substrate (22) and the at least one functional device (26) arranged thereon,
e) generating recessed regions (38) on the functional device assembly (20), and **characterized by**
f) producing a lens holder structure (50), an air mass meter (78), a pressure sensor or a gas sensor, by way of 3D printing, or a further 3D printing structure (76) within the recessed regions (38) of the functional device assembly (20).

2. Method according to Claim 1, **characterized in that** the lens holder structure (50) or the air mass meter (78) or the further 3D printing structure (76) is generated according to method step f) by means of 3D printing methods such as inkjet printing or FDM (Fused Deposition Modelling) or laser sintering (SLA).

3. Method according to Claim 1, **characterized in that** the lens holder structure (50) or the air mass meter (78) or the further 3D printing structure (76) is implemented from electrically non-conductive materials according to method step f).

4. Method according to Claim 1, **characterized in that**, according to method step f), the lens holder structure (50) or the air mass meter (78) or the further 3D printing structure is generated by means of incorporated optical markers (72) for position adjustment or by means of registration marks (74) on a top side of the carrier substrate (22).

5. Method according to Claim 1, **characterized in that** the lens holder structure (50) or the air mass meter (78) or the further 3D printing structure (76) enables a media flow, an incidence of light on imager boards (46, 48), instances of beam focusing, shielding or beam shaping.

6. Method according to Claim 1, **characterized in that** the recessed regions (38) are generated according to method step e) on the functional device assembly (20) on sensor regions, membranes, optical detection areas or imager boards (46, 48).

7. Method according to Claim 1, **characterized in that** lens element holder structures (50) are generated on the functional device assembly (20) on imager boards (46, 48) according to method step f).

8. Method according to Claim 7, **characterized in that**, according to method step f), at least one lens element (58) is produced in the lens element holder structure (50) by way of 3D printing.

9. Method according to Claim 7, **characterized in that**, according to method step f), an arrangement of a plurality of lens elements (58, 64) is produced in the lens element holder structure (50) by way of 3D printing.

10. Use of the method according to any of Claims 1 to 9 for producing functional device assemblies (20) comprising MEMS sensors (= Micro-Electro-Mechanical System) or circuit carriers comprising at least one encapsulated functional device (26).

## Revendications

1. Procédé de fabrication d'un paquet formant composant fonctionnel (20), comprenant les étapes suivantes :
a) fabrication d'un substrat porteur (22) dans un format utile,
b) équipement du substrat porteur (22) obtenu selon l'étape a) avec des composants électroniques (32),
c) création de liaisons de connexion (28, 30) entre au moins un composant fonctionnel (26) et des connexions électriques (34),
d) application d'une masse de scellement (24) sur le substrat porteur (22) et l'au moins un composant fonctionnel (26) disposé sur celui-ci,
e) génération de zones dégagées (38) sur le paquet formant composant fonctionnel (20) et **caractérisé par**
f) création d'une structure porte-lentille (50), d'un débitmètre d'air (78), d'un capteur de pression ou d'un capteur de gaz par impression 3D ou d'une structure d'impression 3D supplémentaire (76) à l'intérieur des zones dégagées (38) du paquet formant composant fonctionnel (20).

2. Procédé selon la revendication 1, **caractérisé en ce que** la structure porte-lentille (50) ou le débitmètre d'air (78) ou la structure d'impression 3D supplémentaire (76) selon l'étape f) sont générés au moyen de procédés d'impression 3D tels que l'impression par jet d'encre ou le FDM (Fused Deposition Modeling - Dépôt de fil fondu) ou le frittage laser (SLA).

3. Procédé selon la revendication 1, **caractérisé en ce que** la structure porte-lentille (50) ou le débitmètre d'air (78) ou la structure d'impression 3D supplémentaire (76) selon l'étape f) sont réalisés à partir de matériaux électriquement non conducteurs.

4. Procédé selon la revendication 1, **caractérisé en ce que**, selon l'étape f), la structure porte-lentille (50) ou le débitmètre d'air (78) ou la structure d'impression 3D supplémentaire sont générés au moyen de marqueurs optiques intégrés (72) destinés à l'alignement de position ou au moyen de marques de repérage (74) sur un côté supérieur du substrat porteur (22).

5. Procédé selon la revendication 1, **caractérisé en ce que** la structure porte-lentille (50) ou le débitmètre d'air (78) ou la structure d'impression 3D supplémentaire (76) permettent un écoulement de fluide, une incidence de lumière sur des cartes d'imageur (46, 48), des focalisations en faisceaux, un blindage ou une formation de faisceau.

6. Procédé selon la revendication 1, **caractérisé en ce que** les zones dégagées (38) sont générées selon l'étape e) sur le paquet formant composant fonctionnel (20) sur des zones de capteurs, des membranes, des champs de détection optiques ou des cartes d'imageur (46, 48).

7. Procédé selon la revendication 1, **caractérisé en ce que** des structures porte-élément de lentille (50) sont générées sur le paquet formant composant fonctionnel (20) sur des cartes d'imageur (46, 48) selon l'étape f).

8. Procédé selon la revendication 7, **caractérisé en ce que**, selon l'étape f), au moins un élément de lentille (58) est fabriqué par impression 3D dans la structure porte-élément de lentille (50).

9. Procédé selon la revendication 7, **caractérisé en ce que**, selon l'étape f), un agencement de plusieurs éléments de lentille (58, 64) est fabriqué par impression 3D dans la structure porte-élément de lentille (50).

10. Utilisation du procédé selon l'une des revendications 1 à 9 pour la fabrication de paquets formant composant fonctionnel (20) comprenant des capteurs MEMS (≙Micro-Electro-Mechanical System - Microsystème électromécanique) ou des porte-circuits comprenant au moins un composant fonctionnel (26) encapsulé.
